# EUROPÄISCHE PATENTSCHRIFT

(11) **EP 2 745 993 B1**
(45) Veröffentlichungstag und Bekanntmachung des Hinweises auf die Patenterteilung: **21.04.2021**
(21) Anmeldenummer: 13182914.5
(22) Anmeldetag: 04.09.2013
(51) Int. Cl.: B25F 3/00

(54) **Werkzeugvorsatz für eine Handwerkzeugmaschine**
Tool attachment for a manual tool machine
Ensemble d'outils pour une machine-outil manuelle

(30) Priorität: 15.11.2012 DE 102012220901; 15.07.2013 DE 102013213816
(43) Veröffentlichungstag der Anmeldung: 25.06.2014
(73) Patentinhaber: Robert Bosch GmbH, 70442 Stuttgart (DE)
(72) Erfinder: Tussing, Torsten, 73257 Koengen (DE); Roehm, Heiko, 70176 Stuttgart (DE)

(56) Entgegenhaltungen:
- WO-A1-92/21469
- WO-A1-2008/068100

## Beschreibung

### Stand der Technik

Die vorliegende Erfindung betrifft einen Werkzeugvorsatz mit einer Befestigungseinheit zur Befestigung an einer Befestigungsschnittstelle einer Handwerkzeugmaschine und eine Handwerkzeugmaschine mit einer Befestigungsschnittstelle zur Befestigung einer Befestigungseinheit des Werkzeugvorsatzes.

Aus dem Stand der Technik ist ein derartiger, nach Art eines Bohrfuttervorsatzes ausgebildeter Werkzeugvorsatz bekannt, der zur Befestigung an einer Befestigungsschnittstelle einer Handwerkzeugmaschine eine Befestigungseinheit aufweist. Diese Befestigungseinheit dient zur Verriegelung des Bohrfuttervorsatzes an der Handwerkzeugmaschine, um ein Abnehmen des Bohrfuttervorsatzes von der Handwerkzeugmaschine in deren Betrieb zu verhindern, wenn ein Antriebsdrehmoment von der Handwerkzeugmaschine auf den Bohrfuttervorsatz übertragen wird. Um eine entsprechende Drehmomentübertragung zu ermöglichen, greift eine dem Bohrfuttervorsatz zugeordnete Antriebswelle in eine der Handwerkzeugmaschine zugeordnete Werkzeugaufnahme ein und wird von dieser drehend angetrieben

Aus WO 92/21469 ist ein weiterer Werkzeugvorsatz bekannt.

Nachteilig am Stand der Technik ist, dass eine axiale Zentrierung des nach Art eines Bohrfuttervorsatzes ausgebildeten Werkzeugvorsatzes an der Handwerkzeugmaschine ausschließlich über die in der Werkzeugaufnahme der Handwerkzeugmaschine angeordnete Antriebswelle des Bohrfuttervorsatzes erfolgt, sodass ein derartiger Bohrfuttervorsatz nur unzureichende Rundlaufeigenschaften aufweisen kann. Hierbei kann eine Unwucht am Bohrfuttervorsatz im Betrieb der Handwerkzeugmaschine zu Schäden am Bohrfuttervorsatz und/oder der Werkzeugaufnahme der Handwerkzeugmaschine führen.

### Offenbarung der Erfindung

Eine Aufgabe der Erfindung ist es daher, einen neuen Werkzeugvorsatz, insbesondere einen Bohrfuttervorsatz, mit verbesserten Rundlaufeigenschaften bereitzustellen.

Dieses Problem wird gelöst durch einen Werkzeugvorsatz gemäß Anspruch 1.

Die Erfindung ermöglicht somit die Bereitstellung eines Werkzeugvorsatzes, bei dem durch die Verwendung einer Zentrierhilfe eine robuste und zuverlässige axiale Zentrierung des Werkzeugvorsatzes an einer zugeordneten Handwerkzeugmaschine ermöglicht werden kann, sodass auf einfache Art und Weise verbesserte Rundlaufeigenschaften des Werkzeugvorsatzes im Betrieb der zugeordneten Handwerkzeugmaschine erreicht werden können.

Die Zentrierhilfe ist zumindest abschnittsweise konusförmig ausgebildet.

Die Erfindung ermöglicht somit die Bereitstellung eines Werkzeugvorsatzes mit einer Befestigungseinheit, die eine unkomplizierte und kostengünstige Zentrierhilfe aufweist.

Die Zentrierhilfe ist bevorzugt zumindest abschnittsweise nach Art eines Rings mit einem zumindest bereichsweise abgeschrägten Außenumfang ausgebildet.

Somit kann eine robuste und stabile Zentrierhilfe bereitgestellt werden.

Die Zentrierhilfe ist an einem axialen Endbereich der Befestigungseinheit ausgebildet.

Somit kann eine schnell und mit vergleichsweise geringem Aufwand herstellbare Zentrierhilfe bereitgestellt werden.

Die Zentrierhilfe ist bevorzugt zum Eingreifen in eine an der Befestigungsschnittstelle der Handwerkzeugmaschine vorgesehene, zumindest abschnittsweise trichterförmige Zentrierhilfe ausgebildet.

Somit können zwei einfache und leicht herstellbare komplementäre geometrische Formen für eine effiziente axiale Zentrierung Anwendung finden.

Gemäß einer Ausführungsform ist die Befestigungseinheit zur verdrehgesicherten Befestigung an der Befestigungsschnittstelle der Handwerkzeugmaschine ausgebildet.

Die Erfindung ermöglicht somit die Bereitstellung eines Werkzeugvorsatzes, bei dem durch eine verdrehgesicherte Befestigung an der Befestigungsschnittstelle der Handwerkzeugmaschine eine stabile und verschleißarme Verbindung zur Handwerkzeugmaschine ermöglicht wird.

Bevorzugt ist der Werkzeugvorsatz nach Art eines Bohrfuttervorsatzes ausgebildet und eine Spannfuttereinheit ist vorgesehen, die drehbeweglich an der Befestigungseinheit gelagert ist.

Somit kann auf einfache Art und Weise eine entsprechende Anzahl von im Betrieb der Handwerkzeugmaschine drehend angetrieben Bauteilen reduziert werden, sodass das Auftreten einer Unwucht zumindest eingeschränkt werden kann und somit ein nach Art eines Bohrfuttervorsatzes ausgebildeter Werkzeugvorsatz mit verbesserten Rundlaufeigenschaften bereitgestellt werden kann.

Das Eingangs genannte Problem wird auch gelöst durch eine Handwerkzeugmaschine gemäß Anspruch 6.

Darüber hinaus wird das Eingangs genannte Problem auch gelöst durch ein Werkzeugsystem gemäß Anspruch 7.

Die Erfindung ermöglicht somit die Bereitstellung eines Werkzeugsystems, bei dem durch ein Zusammenfügen von zueinander komplementären geometrischen Formen eine robuste und zuverlässige axiale Zentrierung des Werkzeugvorsatzes an der Handwerkzeugmaschine ermöglicht werden kann, sodass auf einfache Art und Weise verbesserte Rundlaufeigenschaften des Werkzeugvorsatzes im Betrieb der zugeordneten Handwerkzeugmaschine erreicht werden können.

Gemäß einer Ausführungsform sind die komplementären geometrischen Formen dazu ausgebildet, in axialer Richtung der Befestigungseinheit eine formschlüssige Verbindung auszubilden.

Somit kann eine sichere und stabile axiale Zentrierung des Werkzeugvorsatzes an der Handwerkzeugmaschine ermöglicht werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht einer Handwerkzeugmaschine mit einer Werkzeugaufnahme und einer Befestigungsschnittstelle gemäß einer Ausführungsform,
Fig. 2 eine Schnittansicht eines Ausschnitts der Handwerkzeugmaschine von Fig. 1, und
Fig. 3 eine Schnittansicht eines Werkzeugsystems gemäß einer Ausführungsform mit einem an der Handwerkzeugmaschine von Fig. 1 befestigten und gemäß einer Ausführungsform als Bohrfuttervorsatz ausgebildeten Werkzeugvorsatz.

### Beschreibung der Ausführungsbeispiele

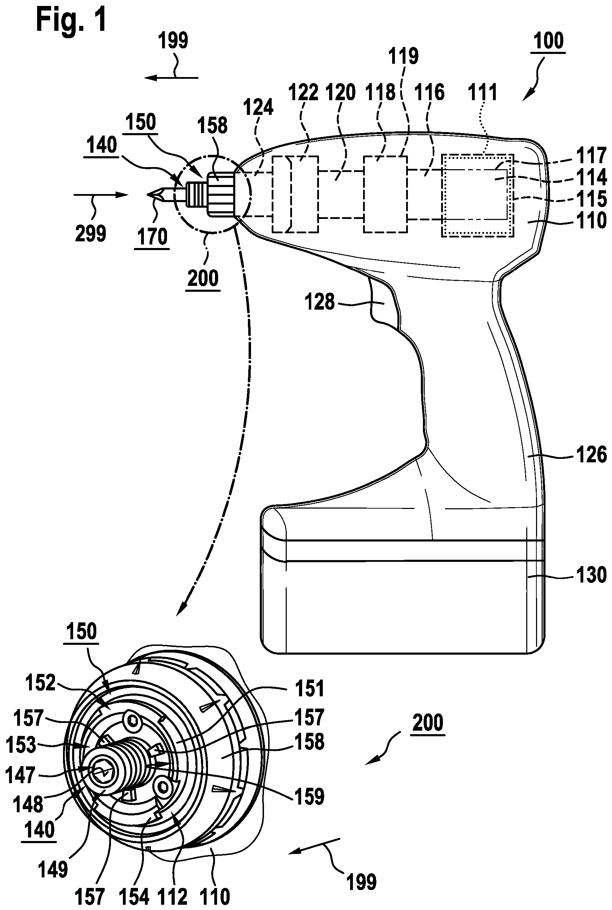

Fig. 1 zeigt eine mit einer Werkzeugaufnahme 140 versehene Handwerkzeugmaschine 100, die ein Gehäuse 110 mit einem Handgriff 126 aufweist, sowie einen vergrößerten Ausschnitt 200 der Handwerkzeugmaschine 100. Gemäß einer Ausführungsform ist die Handwerkzeugmaschine 100 zur netzunabhängigen Stromversorgung mechanisch und elektrisch mit einem Akkupack 130 verbindbar.

Die Handwerkzeugmaschine 100 ist beispielhaft als Akku-Drehschlagschrauber ausgebildet. Es wird jedoch darauf hingewiesen, dass die vorliegende Erfindung nicht auf Akku-Drehschlagschrauber beschränkt ist, sondern vielmehr bei unterschiedlichen Handwerkzeugmaschinen Anwendung finden kann, die eine der Werkzeugaufnahme 140 entsprechende Werkzeugaufnahme aufweisen, unabhängig davon, ob die Handwerkzeugmaschine elektrisch, d.h. netzunabhängig mit dem Akkupack 130 oder netzabhängig, und/oder nicht-elektrisch betreibbar ist.

In dem Gehäuse 110 sind ein von dem Akkupack 130 mit Strom versorgter, elektrischer Antriebsmotor 114, ein Getriebe 118 und ein optionales Schlagwerk 122 angeordnet. Der Antriebsmotor 114 ist z.B. über einen Handschalter 128 betätigbar, d. h. ein- und ausschaltbar, und vorzugsweise derart elektronisch steuer- bzw. regelbar, dass sowohl ein Reversierbetrieb, als auch Vorgaben hinsichtlich einer gewünschten Drehgeschwindigkeit realisierbar sind.

Gemäß einer Ausführungsform ist der Antriebsmotor 114 ein elektronisch kommutierter Antriebsmotor, vorzugsweise ein Gleichstrommotor, der illustrativ Stator- und Rotorkomponenten 111 bzw. 117 aufweist. Hierbei bilden die Statorkomponenten 111 beispielhaft einen Außenstator aus und die Rotorkomponenten 117 beispielhaft einen Innenrotor. Es wird jedoch darauf hingewiesen, dass die Beschreibung eines nach Art eines elektronisch kommutierten Antriebsmotors mit Außenstator und Innenrotor ausgebildeten Antriebsmotors lediglich beispielhaften Charakter hat und nicht als Einschränkung der Erfindung zu verstehen ist, die auch bei einem Antriebsmotor mit Innenstator und Außenrotor oder z.B. bei einem bürstenbehaften Kommutatormotor Anwendung finden kann.

Der Antriebsmotor 114 ist über eine zugeordnete Motorwelle 116 mit dem Getriebe 118 verbunden, das eine Drehung der Motorwelle 116 in eine Drehung eines zwischen Getriebe 118 und Schlagwerk 122 vorgesehenen Antriebsglieds 120, z.B. einer Antriebswelle, umwandelt. Diese Umwandlung erfolgt bevorzugt derart, dass das Antriebsglied 120 sich relativ zur Motorwelle 116 mit vergrößertem Drehmoment, aber verringerter Drehgeschwindigkeit dreht. Der Antriebsmotor 114 ist illustrativ in einem Motorgehäuse 115 angeordnet und das Getriebe 118 in einem Getriebegehäuse 119, wobei das Getriebegehäuse 119 und das Motorgehäuse 115 beispielhaft in dem Gehäuse 110 angeordnet sind.

Das mit dem Antriebsglied 120 verbundene, optionale Schlagwerk 122 ist beispielhaft ein Dreh- bzw. Rotationsschlagwerk, das schlagartige Drehimpulse mit hoher Intensität erzeugt und auf eine Abtriebswelle 124, z.B. eine Abtriebsspindel, überträgt. Ein beispielhaftes Schlagwerk, mit dem das Schlagwerk 122 realisiert werden kann, ist in der DE 20 2006 014 850 U1 beschrieben, auf die hier ausdrücklich Bezug genommen wird und deren Lehren als ein Teil der vorliegenden Beschreibung zu verstehen sind, sodass hier zwecks Knappheit der Beschreibung auf eine eingehende Beschreibung des Schlagwerks 122 verzichtet werden kann.

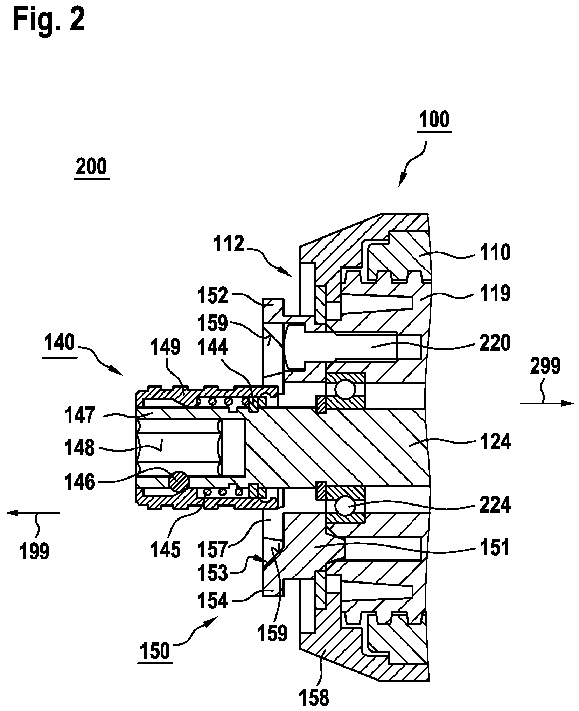

An der Abtriebswelle 124 ist die Werkzeugaufnahme 140 ausgebildet, die illustrativ einen Aufnahmekörper 147 mit Innenmehrkant-Aufnahme 148 aufweist, die zur Aufnahme von Einsatzwerkzeugen mit Außenmehrkant-Kupplungen vorgesehen ist. Am Außenumfang des z.B. drehfest und/oder einstückig mit der Abtriebswelle 124 verbundenen Aufnahmekörpers 147 ist beispielhaft eine von einem Federelement (145 in Fig. 2) in eine von der Handwerkzeugmaschine 100 wegweisende axiale Richtung 199 federbeaufschlagte Verriegelungshülse 149 zur Verriegelung geeigneter Einsatzwerkzeuge in der Innenmehrkant-Aufnahme 148 angeordnet.

Die Werkzeugaufnahme 140 ist beispielhaft nach Art eines Bithalters ausgebildet, d.h. zur Aufnahme eines nach Art eines Schrauberbits ausgebildeten Einsatzwerkzeugs 170, das in Richtung der Handwerkzeugmaschine 100, wie mit einem Pfeil 299 angedeutet, in die Innenmehrkant-Aufnahme 148 eingeschoben wird. Ein derartiger Schrauberbit, der z.B. vom sogenannten HEX-Typ ist, ist hinreichend aus dem Stand der Technik bekannt, sodass hier zwecks Knappheit der Beschreibung auf eine eingehende Beschreibung verzichtet wird. Es wird jedoch darauf hingewiesen, dass die vorliegende Erfindung nicht auf eine Verwendung von HEX-Schrauberbits beschränkt ist, sondern auch weitere Einsatzwerkzeuge in Abhängigkeit von einer jeweils gewählten Ausgestaltung der Werkzeugaufnahme 140, z.B. HEX-Bohrer oder sogenannte SDS-Quick-Einsatzwerkzeuge, Anwendung finden können. Darüber hinaus wird darauf hingewiesen, dass auch der Aufbau und die Funktionsweise eines geeigneten Bithalters dem Fachmann hinreichend bekannt sind, sodass hier zwecks Knappheit der Beschreibung auf eine eingehende Beschreibung des Bithalters 140 verzichtet werden kann.

Gemäß einer Ausführungsform ist der Handwerkzeugmaschine 100 eine Befestigungsschnittstelle 150 zugeordnet, die illustrativ im Bereich des Bithalters 140 am Getriebegehäuse 119 oder unmittelbar am Gehäuse 110 axial und radial unbeweglich befestigt ist und nachfolgend zwecks Klarheit der Beschreibung als die "Maschinenschnittstelle 150" bezeichnet wird. Es wird jedoch darauf hingewiesen, dass die Maschinenschnittstelle 150 lediglich beispielhaft als ein separates Bauteil ausgebildet ist und alternativ hierzu auch einstückig mit dem Getriebegehäuse 119 oder dem Gehäuse 110 ausgebildet sein kann.

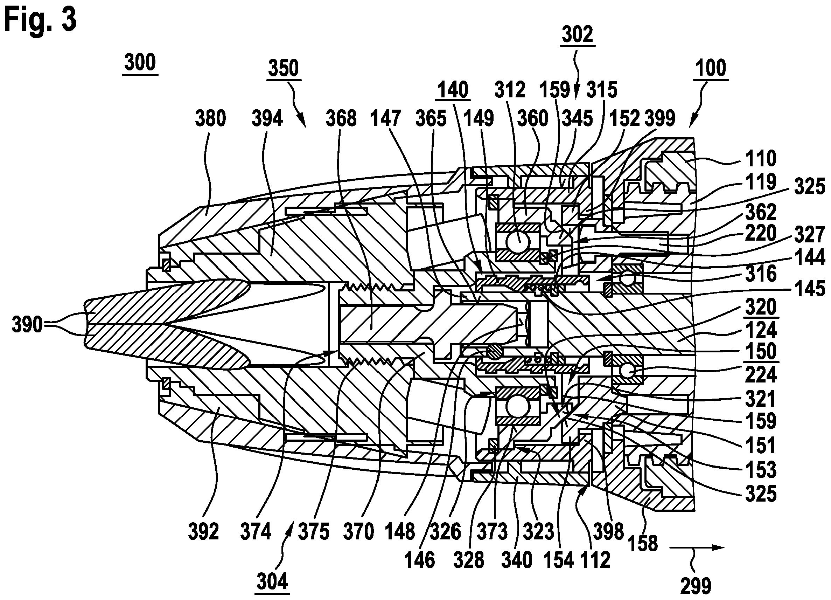

Die Maschinenschnittstelle 150 dient zumindest zur verdrehgesicherten Befestigung eines zugeordneten Bohrfuttervorsatzes (350 in Fig. 3) und weist illustrativ ein an einer Stirnseite 112 des Gehäuses 110 am Getriebegehäuse 119 oder dem Gehäuse 110 verdrehgesichert befestigtes Befestigungselement 151 auf. Dieses ist beispielhaft zumindest abschnittsweise hülsen- bzw. ringförmig ausgebildet und im Bereich einer an der Stirnseite 112 am Gehäuse 110 ringförmig angeordneten Abschluss- bzw. Schutzhülse 158 mit geeigneten Befestigungsgliedern, z.B. Schrauben oder Nieten, befestigt, kann alternativ hierzu aber auch einstückig mit dem Getriebegehäuse 119 oder dem Gehäuse 110 ausgebildet sein. Das Befestigungselement 151 ummantelt den Bithalter 140 bevorzugt zumindest abschnittsweise mit einer vorgegebenen radialen Beabstandung, um eine axiale Verschiebung der Verriegelungshülse 149 des Bithalters 140 im Inneren des Befestigungselements 151 zu ermöglichen.

Es wird jedoch darauf hingewiesen, dass die Maschinenschnittstelle 150 nur beispielhaft zur verdrehgesicherten Befestigung eines Bohrfuttervorsatzes (350 in Fig. 3) ausgebildet ist und nicht zur Einschränkung der Erfindung. Vielmehr können auch andere Werkzeugvorsätze, wie z.B. ein Winkelvorsatz oder ein Exzentervorsatz, verdrehgesichert an der Maschinenschnittstelle 150 befestigt werden.

Illustrativ weist das Befestigungselement 151 an seinem Außenumfang mindestens zwei Halteglieder 152, 154 auf, die nach Art von Bajonetten zur Ausbildung einer Bajonett-Verbindung ausgebildet sind.

Gemäß der Erfindung ist an der Maschinenschnittstelle 150 eine zumindest abschnittsweise konusförmige Zentrierhilfe 153 zur axialen Zentrierung einer Befestigungseinheit (302 in Fig. 3) eines zugeordneten, bevorzugt nach Art eines Bohrfuttervorsatzes ausgebildeten Werkzeugvorsatzes (350 in Fig. 3) vorgesehen. Illustrativ ist das Befestigungselement 151 dazu ausgebildet, die axiale Zentrierung des zugeordneten Werkzeugvorsatzes (350 in Fig. 3) an dem Getriebegehäuse 119 und/oder dem Gehäuse 110 zu ermöglichen, wie untenstehend bei Fig. 3 beschrieben. Hierzu ist am Innenumfang des Befestigungselements 151 eine beispielhaft ringförmige, zumindest abschnittsweise trichterförmige Zentrierfläche 159 zur Ausbildung der Zentrierhilfe 153 vorgesehen.

Es wird jedoch darauf hingewiesen, dass die Zentrierfläche 159 nur beispielhaft trichterförmig ausgebildet ist und nicht als Einschränkung der Erfindung. Vielmehr ist auch eine kegelförmige Ausgestaltung an einem zusätzlichen Zentrierring realisierbar. Dementsprechend repräsentiert eine Bezugnahme auf den Term "konusförmig" im Kontext der vorliegenden Erfindung sowohl eine Bezugnahme auf eine kegelförmige, als auch auf eine trichterförmige Ausgestaltung eines entsprechenden Bauteils. Darüber hinaus kann die Zentrierhilfe 153 anstelle einer einzelnen ring- und trichterförmigen Zentrierfläche 159 mehrere konusförmige Bogenabschnitte aufweisen, usw.

Des Weiteren weist das Befestigungselement 151 mindestens ein und beispielhaft drei optionale Winkeleinstellglieder 157 auf. Diese dienen z.B. bei einer Befestigung eines Winkel- oder Exzentervorsatzes an der Maschinenschnittstelle 150 zur Vorgabe einer vorgegebenen Winkelposition.

Fig. 2 zeigt den Ausschnitt 200 der Handwerkzeugmaschine 100 von Fig. 1 in Schnittansicht zur Verdeutlichung einer beispielhaften Ausgestaltung des Bithalters 140 sowie der Maschinenschnittstelle 150 von Fig. 1. Der Bithalter 140 ist wie bei Fig. 1 beschrieben an der Abtriebswelle 124 von Fig. 1 ausgebildet, die z.B. in einem im Gehäuse 110, bevorzugt im Getriebegehäuse 119, der Handwerkzeugmaschine 100 angeordneten Lagerelement 224, beispielsweise einem Wälzlager, drehbeweglich gelagert ist.

Illustrativ weist der Bithalter 140 den Aufnahmekörper 147 mit der Innenmehrkant-Aufnahme 148 sowie die Verriegelungshülse 149 von Fig. 1 auf. Die Verriegelungshülse 149 dient beispielhaft zur radialen Beaufschlagung von mindestens einem Verriegelungselement 146, z.B. einer Verriegelungskugel, und wird von einem zugeordneten Federelement 145, das sich gegen einen an der Abtriebswelle 124 gehaltenen Sicherungsring 144 abstützt, in die von der Handwerkzeugmaschine 100 wegweisende axiale Richtung 199 federbeaufschlagt. Zur Entriegelung der Werkzeugaufnahme 140 muss die Verriegelungshülse 149 gegen eine vom Federelement 145 aufgebrachte Federkraft in Richtung der Stirnseite 112 der Handwerkzeugmaschine 100 verschoben werden, sodass eine radial auswärts gerichtete Bewegung der mindestens einen Verriegelungskugel 146 ermöglicht wird.

Darüber hinaus verdeutlicht Fig. 2 beispielhaft nach Art von Schrauben ausgebildete Befestigungsglieder 220, mit denen das Befestigungselement 151 der Maschinenschnittstelle 150 an der Stirnseite 112 befestigt ist. Des Weiteren verdeutlicht Fig. 2 die beispielhaft trichterförmige Ausgestaltung der Zentrierfläche 159 der Zentrierhilfe 153 des Befestigungselements 151.

Fig. 3 zeigt ein beispielhaftes Werkzeugsystem 300, das illustrativ die Handwerkzeugmaschine 100 von Fig. 1 und einen beispielhaften Werkzeugvorsatz 350 aufweist. Hierbei ist die Handwerkzeugmaschine 100 nur abschnittsweise anhand eines Ausschnitts des Getriebegehäuses 119 bzw. des Gehäuses 110 von Fig. 1 gezeigt, an dessen Stirnseite 112 die Maschinenschnittstelle 150 von Fig. 1 und 2 angeordnet ist, und in dem die Abtriebswelle 124 in dem illustrativen Wälzlager 224 von Fig. 2 drehbeweglich gelagert ist, wobei an der Abtriebswelle 124 die Werkzeugaufnahme 140 von Fig. 1 und 2 angeordnet ist.

Gemäß einer Ausführungsform ist der Werkzeugvorsatz 350 zur verdrehgesicherten Befestigung an der Maschinenschnittstelle 150 der Handwerkzeugmaschine 100 ausgebildet. Bevorzugt ist der Werkzeugvorsatz 350 nach Art eines Bohrfuttervorsatzes ausgebildet und wird deshalb im Kontext der vorliegenden Erfindung auch als der "Bohrfuttervorsatz 350" bezeichnet. Es wird jedoch darauf hingewiesen, dass der Werkzeugvorsatz 350 nur beispielhaft als Bohrfuttervorsatz ausgebildet ist und nicht zur Einschränkung der Erfindung. Vielmehr kann der Werkzeugvorsatz 350 eine beliebige Ausgestaltung haben, z.B. nach Art eines Winkelvorsatzes, eines Exzentervorsatzes usw., die wie oben beschrieben ebenfalls verdrehgesichert an der Maschinenschnittstelle 150 der Handwerkzeugmaschine 100 befestigt werden können.

Der Bohrfuttervorsatz 350 weist beispielhaft eine Befestigungseinheit 302 sowie eine Spannfuttereinheit 304 auf. Die Spannfuttereinheit 304 weist beispielhaft einen Tragkörper 394 auf, an dem eine Mehrzahl von Spannbacken 390 gelagert ist, die über einen mit einer Spannhülse 380 versehenen Spannkörper 392 zum Einspannen eines zugeordneten Einsatzwerkzeugs, z.B. eines Rundbohrers, betätigbar ist. Der Tragkörper 394 ist z.B. über eine Schraubverbindung 375 verdrehgesichert an einem ersten axialen Endbereich 374 eines der Befestigungseinheit 302 zugeordneten Betätigungsglieds 370 befestigt, sodass sich der Tragkörper 394 bei einer Drehbewegung des Betätigungsglieds 370 mit diesem mit dreht. Alternativ hierzu kann der Tragkörper 394 z.B. auch über eine Pressverbindung mit dem Betätigungsglied 370 verbunden sein oder auch einstückig mit diesem ausgebildet sein. Illustrativ ist in dem zumindest abschnittsweise hülsenförmig ausgebildeten Betätigungsglied 370 eine Antriebswelle 368 verdrehgesichert aufgenommen, sodass sich das Betätigungsglied 370 bei einer Drehbewegung der Antriebswelle 368 mit dieser mit dreht. Alternativ hierzu können die Antriebswelle 368 und das Betätigungsglied 370 auch einstückig ausgebildet sein.

An einem freien axialen Ende der Antriebswelle 368, das exemplarisch in einem zweiten axialen Endbereich des Betätigungsglieds 370 aufgenommen ist, ist eine Mehrkant-Mitnahmekontur 365 ausgebildet. Ein Außenumfang des zweiten axialen Endbereichs des Betätigungsglieds 370 ist drehbeweglich in einem der Befestigungseinheit 302 zugeordneten Lagerelement 312, z.B. einem nach Art eines Radiallagers ausgebildeten Wälzlager, gelagert bzw. bevorzugt in dieses eingepresst, sodass die Spannfuttereinheit 304 drehbeweglich an der Befestigungseinheit 302 gelagert ist. Das Lagerelement 312 wird hierbei in axialer Richtung des Betätigungsglieds 370 zwischen einer an diesem ausgebildeten Ringschulter 326 und einem an diesem befestigten Sicherungsring 327 axial lagefixiert. Es wird jedoch darauf hingewiesen, dass eine geeignete Realisierung der Spannfuttereinheit 304 hinreichend aus dem Stand der Technik bekannt ist, sodass hier auf eine eingehende Beschreibung der Spannfuttereinheit 304 zwecks Knappheit der Beschreibung verzichtet werden kann.

Die Befestigungseinheit 302 ist zur verdrehgesicherten Befestigung an der Maschinenschnittstelle 150 der Handwerkzeugmaschine 100 ausgebildet und hat beispielhaft einen Grundkörper 315, an dessen Außenumfang mindestens zwei Halteglieder 398, 399 vorgesehen sind, die z.B. nach Art von Bajonetten zur Ausbildung einer Bajonett-Verbindung mit den Bajonetten 152, 154 der Maschinenschnittstelle 150 ausgebildet sind. Der Grundkörper 315 bildet einen Innenraum 316 aus und weist einen Außenumfang 345 auf, an dem illustrativ eine Betätigungs- bzw. Verriegelungshülse 340 angeordnet ist. Darüber hinaus hat der Grundkörper 315 illustrativ eine innere Ringschulter 323 und einen an seinem Innenumfang befestigten, inneren Sicherungsring 328, wobei im Bereich zwischen der Ringschulter 323 und dem Sicherungsring 328 beispielhaft ein Zentrierglied 360 axial lagefixiert ist. Dieses Zentrierglied 360 kann alternativ hierzu auch einstückig mit dem Grundkörper 315 ausgebildet sein, bzw. an diesen angeformt sein. Am Innenumfang 373 des Zentrierglieds 360 ist beispielhaft das Lagerelement 312 angeordnet und bevorzugt eingepresst.

Gemäß einer Ausführungsform sind an der Befestigungseinheit 302 und der Maschinenschnittstelle 150 der Handwerkzeugmaschine 100 komplementäre geometrische Formen vorgesehen, die dazu ausgebildet sind, zur axialen Zentrierung der Befestigungseinheit 302 an der Maschinenschnittstelle 150 ineinander zu greifen. Diese komplementären geometrischen Formen sind dazu ausgebildet, in axialer Richtung der Befestigungseinheit eine formschlüssige Verbindung auszubilden. Deshalb sind unter komplementären geometrischen Formen im Kontext der vorliegenden Erfindung ganz allgemein geometrische Formen zu verstehen, die zu einer formschlüssigen Verbindung zusammengefügt werden können.

Illustrativ weist das Zentrierglied 360 der Befestigungseinheit 302 mindestens eine zumindest abschnittsweise konusförmige Zentrierhilfe 320 auf. Diese ist zum Eingreifen in die an der Maschinenschnittstelle 150 der Handwerkzeugmaschine 100 vorgesehene, zumindest abschnittsweise trichterförmige Zentrierhilfe 153 vorgesehen und bevorzugt zumindest abschnittsweise nach Art eines Rings 321 mit einem zumindest bereichsweise abgeschrägten Außenumfang 325 an einem axialen Endbereich 362 der Befestigungseinheit 302 ausgebildet. Alternativ hierzu kann die Zentrierhilfe 320 anstelle des Rings 321 z.B. mehrere konusförmige Bogenabschnitte aufweisen, usw.

Zur Montage des Bohrfuttervorsatzes 350 an der Maschinenschnittstelle 150 der Handwerkzeugmaschine 100 wird der Bohrfuttervorsatz 350 in die Richtung 299 von Fig. 1 an die Maschinenschnittstelle 150 herangeführt und derart daran positioniert, dass das Betätigungsglied 370 zur Anlage gegen die Verriegelungshülse 149 der Werkzeugaufnahme 140 der Handwerkzeugmaschine 100 gebracht wird, sodass das freie Ende der Antriebswelle 368 zumindest abschnittsweise in die leere Innenmehrkant-Aufnahme 148 der Werkzeugaufnahme 140 eingreift und an einem vollständigen Eingreifen durch die mindestens eine Verriegelungskugel 146 von Fig. 2 gehindert wird. Diese Verriegelungskugel 146, oder andere geeignete Verriegelungselemente, werden von der Verriegelungshülse 149 der Werkzeugaufnahme 140 auf eine z.B. dem Fachmann bekannte Art und Weise radial einwärts beaufschlagt, um somit ein ungehindertes Einschieben der Antriebswelle 368 in die Innenmehrkant-Aufnahme 148 zu verhindern.

In einem weiteren Schritt wird nun der Bohrfuttervorsatz 350 in die Richtung 299 auf die Maschinenschnittstelle 150 aufgeschoben, z.B. bis der Grundkörper 315 gegen das Befestigungselement 151 der Maschinenschnittstelle 150 anliegt, sodass durch eine Drehung der Betätigungs- bzw. Verriegelungshülse 340 die am Grundkörper 315 vorgesehenen Bajonette 398, 399 in Eingriff mit den Bajonetten 152, 154 des Befestigungselements 151 gebracht und somit an diesen verriegelt werden können, sodass die Befestigungseinheit 302 an der Maschinenschnittstelle 150 lösbar befestigt bzw. verriegelt wird.

Darüber hinaus wird hierbei die zumindest abschnittsweise konusförmige Zentrierhilfe 320 der Befestigungseinheit 302 gegen die zumindest abschnittsweise trichterförmige Zentrierhilfe 153 der Maschinenschnittstelle 150 in Anlage gebracht. Somit kann eine sichere und zuverlässige axiale Zentrierung des Bohrfuttervorsatzes 350 an der Maschinenschnittstelle 150 der Handwerkzeugmaschine 100 ermöglicht werden.

Es wird jedoch erneut darauf hingewiesen, dass die Zentrierhilfen 320 und 153 lediglich beispielhaft konusförmig ausgebildet sind. Vielmehr müssen diese lediglich wie oben beschrieben zur Ausbildung einer formschlüssigen Verbindung geeignete, komplementäre geometrische Formen aufweisen. Dementsprechend kann z.B. die Zentrierhilfe 153 der Maschinenschnittstelle 150 wie bei Fig. 1 bis 3 gezeigt trichterförmig ausgebildet sein, während die Zentrierhilfe 320 des Bohrfuttervorsatzes 350 z.B. zylinder- bzw. ringförmig ist. Alternativ hierzu kann z.B. die Zentrierhilfe 320 des Bohrfuttervorsatzes 350 wie oben beschrieben konusförmig, d.h. kegel- oder trichterförmig, ausgebildet sein, während die Zentrierhilfe 153 der Maschinenschnittstelle 150 zylinder- bzw. ringförmig ausgebildet ist, usw.

## Patentansprüche

1. Werkzeugvorsatz (350) mit einer Befestigungseinheit (302) zur Befestigung an einer Befestigungsschnittstelle (150) einer Handwerkzeugmaschine (100), wobei an der Befestigungseinheit (302) eine Zentrierhilfe (320) zur axialen Zentrierung der Befestigungseinheit (302) an der Befestigungsschnittstelle (150) vorgesehen ist, **dadurch gekennzeichnet, dass** die Befestigungseinheit (302) einen Grundkörper (315) aufweist, an dessen Außenumfang mindestens zwei Halteglieder (398, 399) vorgesehen sind, die nach Art von Bajonetten zur Ausbildung einer Bajonett-Verbindung ausgebildet sind, und ein in einem Innenraum (316) des Grundkörpers (315) an dem Grundkörper (315) angeordnetes Zentrierglied (360) aufweist, welches an einem Außenumfang (345) die zumindest abschnittsweise konusförmige Zentrierhilfe (320) aufweist, wobei die Zentrierhilfe (320) an einem axialen Endbereich (362) der Befestigungseinheit (302) ausgebildet ist.

2. Werkzeugvorsatz nach Anspruch 1, **dadurch gekennzeichnet, dass** die Zentrierhilfe (320) zumindest abschnittsweise nach Art eines Rings (321) mit einem zumindest bereichsweise abgeschrägten Außenumfang (325) ausgebildet ist.

3. Werkzeugvorsatz nach einem der vorhergehenden Ansprüche, **dadurch gekennzeichnet, dass** die Zentrierhilfe (320) zum Eingreifen in eine an der Befestigungsschnittstelle (150) der Handwerkzeugmaschine (100) vorgesehene, zumindest abschnittsweise trichterförmige Zentrierhilfe (153) ausgebildet ist.

4. Werkzeugvorsatz nach einem der vorhergehenden Ansprüche, **dadurch gekennzeichnet, dass** die Befestigungseinheit (302) zur verdrehgesicherten Befestigung an der Befestigungsschnittstelle (150) der Handwerkzeugmaschine (100) ausgebildet ist.

5. Werkzeugvorsatz nach einem der vorhergehenden Ansprüche, der nach Art eines Bohrfuttervorsatzes ausgebildet ist, **dadurch gekennzeichnet, dass** eine Spannfuttereinheit (304) vorgesehen ist, die drehbeweglich an der Befestigungseinheit (302) gelagert ist.

6. Handwerkzeugmaschine (100) mit einer Befestigungsschnittstelle (150) zur Befestigung einer Befestigungseinheit (302) eines Werkzeugvorsatzes (350), wobei an der Befestigungsschnittstelle (150) eine zumindest abschnittsweise konusförmige Zentrierhilfe (153) zur axialen Zentrierung der Befestigungseinheit (302) des Werkzeugvorsatzes vorgesehen ist, **dadurch gekennzeichnet, dass** die Befestigungsschnittstelle (150) ein an einem Getriebegehäuse (119) oder einem Gehäuse (110) verdrehgesichert befestigtes Befestigungselement (151) aufweist, welches an seinem Außenumfang mindestens zwei Halteglieder (152, 154) aufweist, die nach Art von Bajonetten zur Ausbildung einer Bajonett-Verbindung ausgebildet sind, und an seinem Innenumfang die zumindest abschnittsweise konusförmige Zentrierhilfe (153) aufweist.

7. Werkzeugsystem (300) mit einer Handwerkzeugmaschine (100) nach Anspruch 6 und einem Werkzeugvorsatz (350) nach einem der Ansprüche 1 bis 5, wobei die Zentrierhilfe (320) der Befestigungseinheit (302) und die Zentrierhilfe (153) der Befestigungsschnittstelle (150) dazu ausgebildet sind, zur axialen Zentrierung der Befestigungseinheit (302) an der Befestigungsschnittstelle (150) ineinander zu greifen.

8. Werkzeugsystem nach Anspruch 7, **dadurch gekennzeichnet, dass** die Zentrierhilfe (320) der Befestigungseinheit (302) und die Zentrierhilfe (153) der Befestigungsschnittstelle (150) dazu ausgebildet sind, in axialer Richtung der Befestigungseinheit (302) eine formschlüssige Verbindung auszubilden.

## Claims

1. Tool attachment (350) having a fastening unit (302) for fastening on a fastening interface (150) of a hand-held power tool (100), wherein a centring aid (320) is provided on the fastening unit (302) for the purpose of centring the fastening unit (302) axially on the fastening interface (150), **characterized in that** the fastening unit (302) has a main body (315), on the outer circumference of which are provided at least two retaining members (398, 399), which are designed in the manner of bayonets for forming a bayonet connection, and also has a centring member (360), which is arranged on the main body (315), in an interior (316) of the main body (315), and has the at least partially conical centring aid (320) on an outer circumference (345), wherein the centring aid (320) is formed at an axial end region (362) of the fastening unit (302).

2. Tool attachment according to Claim 1, **characterized in that** the centring aid (320) is designed, at least in part, in the manner of a ring (321) with an outer circumference (325) which is bevelled at least in certain regions.

3. Tool attachment according to either of the preceding claims, **characterized in that** the centring aid (320) is designed to engage in an at least partially funnel-like centring aid (153), which is provided on the fastening interface (150) of the hand-held power tool (100).

4. Tool attachment according to one of the preceding claims, **characterized in that** the fastening unit (302) is designed for fastening in a rotationally secured manner on the fastening interface (150) of the hand-held power tool (100).

5. Tool attachment according to one of the preceding claims designed in the manner of a drill-chuck attachment, **characterized in that** a clamping-chuck unit (304) is provided, which is mounted in a rotatable manner on the fastening unit (302).

6. Hand-held power tool (100) having a fastening interface (150) for the fastening of a fastening unit (302) of a tool attachment (350), wherein an at least partially conical centring aid (153) is provided on the fastening interface (150) for the purpose of centring the fastening unit (302) of the tool attachment axially, **characterized in that** the fastening interface (150) has a fastening element (151), which is fastened in a rotationally secured manner on a gear-mechanism housing (119) or a housing (110) and, on its outer circumference, has at least two retaining members (152, 154), which are designed in the manner of bayonets for forming a bayonet connection, and also has the at least partially conical centring aid (153) on its inner circumference.

7. Tool system (300) having a hand-held power tool (100) according to Claim 6 and a tool attachment (350) according to one of Claims 1 to 5, wherein the centring aid (320) of the fastening unit (302) and the centring aid (153) of the fastening interface (150) are designed to engage one in the other for the purpose of centring the fastening unit (302) axially on the fastening interface (150).

8. Tool system according to Claim 7, **characterized in that** the centring aid (320) of the fastening unit (302) and the centring aid (153) of the fastening interface (150) are designed to form a form-fitting connection in the axial direction of the fastening unit (302).

## Revendications

1. Adaptateur d'outil (350) comprenant une unité de fixation (302) pour la fixation à une interface de fixation (150) d'une machine-outil à main (100), un auxiliaire de centrage (320) pour le centrage axial de l'unité de fixation (302) à l'interface de fixation (150) étant prévu au niveau de l'unité de fixation (302), **caractérisé en ce que** l'unité de fixation (302) présente un corps de base (315) au niveau de la périphérie extérieure duquel sont prévus au moins deux organes de retenue (398, 399) qui sont réalisés à la manière de baïonnettes pour réaliser une connexion à baïonnette, et présente un organe central (360) disposé dans un espace interne (316) du corps de base (315) sur le corps de base (315), lequel présente, au niveau d'une périphérie extérieure (345), l'auxiliaire de centrage (320) de forme conique au moins en partie, l'auxiliaire de centrage (320) étant réalisé au niveau d'une région d'extrémité axiale (362) de l'unité de fixation (302).

2. Adaptateur d'outil selon la revendication 1, **caractérisé en ce que** l'auxiliaire de centrage (320) est réalisé au moins en partie à la manière d'une bague (321) avec une périphérie extérieure (325) au moins partiellement biseautée.

3. Adaptateur d'outil selon l'une quelconque des revendications précédentes, **caractérisé en ce que** l'auxiliaire de centrage (320) est réalisé pour s'engager dans un auxiliaire de centrage (153) au moins en partie en forme d'entonnoir prévu au niveau de l'interface de fixation (150) de la machine-outil à main (100).

4. Adaptateur d'outil selon l'une quelconque des revendications précédentes, **caractérisé en ce que** l'unité de fixation (302) est réalisée pour la fixation solidaire en rotation à l'interface de fixation (150) de la machine-outil à main (100).

5. Adaptateur d'outil selon l'une quelconque des revendications précédentes, qui est réalisé à la manière d'un adaptateur de mandrin de forage, **caractérisé en ce qu'**une unité de mandrin de serrage (304) est prévue, laquelle est supportée de manière mobile en rotation au niveau de l'unité de fixation (302).

6. Machine-outil à main (100) comprenant une interface de fixation (150) pour la fixation d'une unité de fixation (302) d'un adaptateur d'outil (350), un auxiliaire de centrage (153) de forme au moins en partie conique pour le centrage axial de l'unité de fixation (302) de l'adaptateur d'outil étant prévu au niveau de l'interface de fixation (150), **caractérisée en ce que** l'interface de fixation (150) présente un élément de fixation (151) fixé de manière solidaire en rotation à un boîtier de transmission (119) ou à un boîtier (110), lequel présente, au niveau de sa périphérie extérieure, au moins deux organes de retenue (152, 154) qui sont réalisés à la manière de baïonnettes pour réaliser une connexion à baïonnette, et présente, au niveau de sa périphérie intérieure, l'auxiliaire de centrage (153) au moins en partie conique.

7. Système d'outil (300) comprenant une machine-outil à main (100) selon la revendication 6 et un adaptateur d'outil (350) selon l'une quelconque des revendications 1 à 5, l'auxiliaire de centrage (320) de l'unité de fixation (302) et l'auxiliaire de centrage (153) de l'interface de fixation (150) étant réalisés de manière à s'engager l'un dans l'autre pour le centrage axial de l'unité de fixation (302) à l'interface de fixation (150).

8. Système d'outil selon la revendication 7, **caractérisé en ce que** l'auxiliaire de centrage (320) de l'unité de fixation (302) et l'auxiliaire de centrage (153) de l'interface de fixation (150) sont réalisés de manière à établir une connexion par engagement par correspondance de formes dans la direction axiale de l'unité de fixation (302).
